# EUROPEAN PATENT SPECIFICATION

(11) **EP 4 290 065 B1**
(45) Date of publication and mention of the grant of the patent: **25.11.2026**
(21) Application number: 21924807.7
(22) Date of filing: 06.12.2021
(51) Int. Cl.: F02D 41/40, F02D 41/14, F02D 41/04

(54) **CONTROL DEVICE FOR ENGINE**
STEUERUNGSVORRICHTUNG FÜR EINEN MOTOR
DISPOSITIF DE COMMANDE POUR MOTEUR

(30) Priority: 05.02.2021 JP 2021017234
(43) Date of publication of application: 13.12.2023
(73) Proprietor: KABUSHIKI KAISHA TOYOTA JIDOSHOKKI, Kariya-shi, Aichi 448-8671 (JP)
(72) Inventor: KAWAE, Tsutomu, Kariya-shi, Aichi 448-8671 (JP); WAKISAKA, Yoshifumi, Kariya-shi, Aichi 448-8671 (JP)
(74) Representative: TBK
(86) International application number: PCT/JP2021/044673
(87) International publication number: WO 2022/168422

(56) References cited:
- EP-A1- 1 798 404
- JP-A- 2018 112 146
- JP-A- 2018 112 146
- JP-A- 2020 002 862
- US-A1- 2007 044 781
- US-B2- 9 003 776

## Description

### TECHNICAL FIELD

The present invention relates to control of fuel injection into a cylinder of an engine.

### BACKGROUND ART

Regarding fuel injection into a cylinder of an engine, there is widely known a technique of performing divided fuel injections, namely, a main injection of fuel and a sub injection performed after the main injection in order to improve fuel efficiency and reduce soot.

Regarding determination of a timing and an injection amount of the sub injection, for example, Japanese Patent Laying-Open No. 2017-227169 (PTL 1) discloses a technique of estimating an amount of soot included in an exhaust gas and an amount of fuel consumption with respect to a timing of a sub injection, and determining the timing and an injection amount of the sub injection based on the estimated amount of soot and the estimated amount of fuel consumption.

### CITATIONS LIST

### PATENT LITERATURE

PTL 1: Japanese Patent Laying-Open No. 2017-227169
JP 2018 112146 A discloses a control device for an engine according to the preamble of claim 1.

### SUMMARY

### TECHNICAL PROBLEM

In order to improve fuel efficiency in the engine described above, it is desirable to reduce a cooling loss. For that reason, for example, the injection amount of the sub injection described above is increased. This reduces the cooling loss derived from the main injection, thus improving fuel efficiency.

However, the increase in the injection amount of the sub injection results in an increase in spray penetration by the sub injection, and an increase in a velocity of spray impinging on a wall surface of a combustion chamber. As a result, the fuel diffuses along the wall surface of the combustion chamber, which may result in an increase in the cooling loss derived from the sub injection, an increase in the cooling loss in the entire fuel injection, and deterioration of the fuel efficiency. Thus, it is required to set an optimum injection amount of the sub injection in consideration of the cooling loss derived from the sub injection.

The present invention has been made to solve the above-described problems, and an object of the present invention is to provide a control device for an engine that sets an optimum injection amount of a sub injection in consideration of a cooling loss derived from the sub injection.

### SOLUTION TO PROBLEM

The object of the invention is achieved with a control device for an engine according to claim 1. Further advantageous developments of the invention are subject-matter of the dependent claims.

In the control device for an engine according to the invention, since the velocity of the tip of the spray of the fuel is in the decrease state due to the end of the sub injection when the fuel reaches the wall surface of the combustion chamber, the fuel impinging on the wall surface is prevented from greatly diffusing along the wall surface, and an increase in the cooling loss derived from the sub injection can be prevented.

Preferably, the setting unit sets the first injection amount based on the second injection amount set.

With this setting, the increase in the cooling loss derived from the sub injection can be prevented and at the same time the required torque can be satisfied.

Further preferably, the control unit performs the sub injection a plurality of times after the main injection.

This can achieve a further reduction in the cooling loss derived from the main injection and at the same time can prevent the increase in the cooling loss derived from the sub injection, thus improving fuel efficiency.

### ADVANTAGEOUS EFFECTS

According to the present invention, it is possible to provide the control device for the engine that sets the optimum injection amount of the sub injection in consideration of the cooling loss derived from the sub injection.

### BRIEF DESCRIPTION OF DRAWINGS

Fig. 1 is a diagram illustrating an example of a configuration of an engine according to the present embodiment.
Fig. 2 is an explanatory diagram illustrating a main injection and a sub injection.
Fig. 3 is an explanatory diagram illustrating an example of a state of fuel injected in a case where the sub injection after the main injection is not performed.
Fig. 4 is an explanatory diagram illustrating an example of a state of fuel injected in a case where the sub injection after the main injection is performed.
Fig. 5 is a flowchart illustrating an example of processing executed by a control device.
Fig. 6 is a diagram illustrating an example of a temporal change of a tip velocity of spray.
Fig. 7 is a diagram illustrating a relationship between a cooling loss and a sub injection amount.
Fig. 8 is a diagram plotting respective tip velocities on a wall surface corresponding to a plurality of injection amounts.
Fig. 9 is a diagram illustrating a relationship between various cooling losses and a sub injection amount.
Fig. 10 is a diagram illustrating a relationship between thermal efficiency and a sub injection amount.

### DESCRIPTION OF EMBODIMENTS

Hereinafter, the present embodiment will be described with reference to the drawings. In the following description, the same components are denoted by the same reference numerals and signs. The same components have the same names and functions. Thus, detailed description thereof will not be repeated.

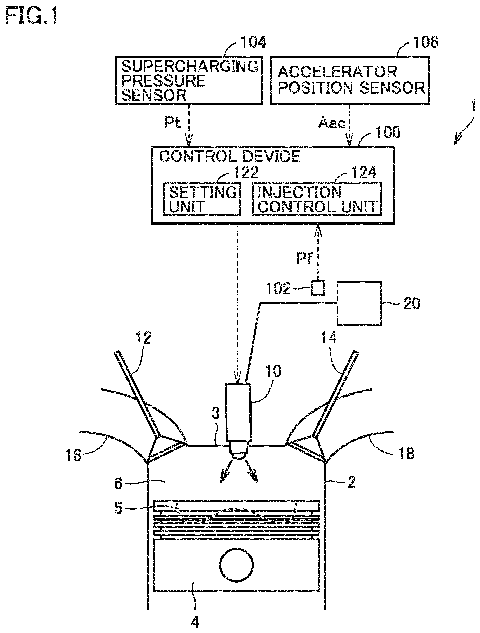

Fig. 1 is a diagram illustrating an example of a configuration of an engine 1 according to the present embodiment. The engine 1 is, for example, a cylinder injection type internal combustion engine represented by a diesel engine. For example, the engine 1 is mounted as a power source on a mobile body such as a vehicle.

As illustrated in Fig. 1, the engine 1 includes a cylinder 2, a piston 4, a fuel injection device 10, an intake valve 12, an exhaust valve 14, an intake passage 16, an exhaust passage 18, a common rail 20, a control device 100, an injection pressure sensor 102, a supercharging pressure sensor 104, and an accelerator position sensor 106.

The cylinder 2 is formed in a cylinder block of the engine 1. A plurality of cylinders 2 may be formed in the cylinder block of the engine 1. The cylinder 2 slidably receives the piston 4. The cylinder 2 has a top portion 3 to which one end portion of the intake passage 16 and one end portion of the exhaust passage 18 are connected. The top portion 3 of the cylinder 2, an upper surface of the piston 4, and inner walls of side surfaces of the cylinder 2 form a combustion chamber 6. In the combustion chamber 6, an air-fuel mixture supplied into the cylinder 2 is combusted. Air flows through an air inlet (not illustrated) that is the other end portion of the intake passage 16, and the fuel is directly injected into the cylinder 2 by the fuel injection device 10. The piston 4 has, on its upper surface, a recess 5.

The fuel injection device 10 is provided in the top portion 3 of the cylinder 2 such that an end of the fuel injection device 10 protrudes into the cylinder 2. The fuel injection device 10 performs an injection operation of injecting fuel based on a control signal from the control device 100. The fuel injection device 10 injects fuel toward a wall surface of the recess 5 on the upper surface of the piston 4.

For example, the fuel injection device 10 includes an injector having a body that has an injection hole, and a needle that is provided inside the body and opens and closes the injection hole. The fuel injection device 10 is connected to a fuel pump and a fuel tank (which are not illustrated) through the common rail 20. The fuel pump pressure-feeds the fuel in the fuel tank into the common rail 20 in response to a control signal from the control device 100. The control device 100 controls the fuel pump such that a pressure of the fuel in the common rail 20 becomes a predetermined pressure. In response to a control signal from the control device 100, the needle operates to bring the injection hole into an open state (that is, to bring the injection hole and the common rail 20 into a communicated state), whereby the fuel injection device 10 supplies the fuel in the common rail 20 to the combustion chamber 6 in the cylinder 2.

The control device 100 determines a fuel injection amount injected in one cycle in the fuel injection device 10 based on, for example, an operating state of the engine 1 and a required output. The control device 100 generates a control command value corresponding to the determined fuel injection amount and controls the fuel injection device 10 using the generated control command value. For example, the control command value is a value indicating an injection period during which fuel is injected from the fuel injection device 10 (more specifically, a period during which the injection hole is in the open state).

The intake valve 12 is provided at a connection part between the top portion 3 of the cylinder 2 and the one end portion of the intake passage 16. Using an intake cam that rotates in synchronization with rotation of a crankshaft (not illustrated) that is an output shaft, the intake valve 12 operates in an open state during a predetermined period (for example, the intake stroke) of a period in one cycle and operates in a closed state during a period other than the predetermined period. The air taken in from the air inlet flows through the cylinder 2 when the intake valve 12 is in the open state.

The piston 4 is coupled to a crankshaft that is an output shaft of the engine 1 through a connecting rod (not illustrated). When the injection operation is performed using the fuel injection device 10 in a predetermined crank angle section including a rotation angle (hereinafter, also referred to as crank angle) of the crankshaft at which the piston 4 reaches a top dead center (TDC), the air-fuel mixture formed in the combustion chamber 6 is compressed in a compression stroke and combusted by self-ignition. Then, in an expansion stroke, the piston 4 is operated to be pushed down by a combustion pressure (pressure wave) generated by the combustion of the mixture. A vertical motion of the piston 4 is converted into a rotational motion in the crankshaft, so that the combustion pressure acting on the piston 4 acts on the crankshaft as output torque to rotate the crankshaft.

The exhaust valve 14 is connected to a connection part between the cylinder 2 and the one end portion of the exhaust passage 18. Using an exhaust cam that rotates in synchronization with the rotation of the crankshaft, the exhaust valve 14 operates in an open state during a predetermined period (for example, an exhaust stroke) of a period in one cycle and operates in a closed state during a period other than the predetermined period. The gas combusted in the combustion chamber 6 of the cylinder 2 is discharged to the exhaust passage 18 as an exhaust gas when the exhaust valve 14 is in the open state.

In the exhaust passage 18, an exhaust treatment device (not illustrated) is provided. The exhaust treatment device purifies predetermined components (for example, nitrogen oxides and the like) contained in the exhaust gas. The exhaust gas flowing through the exhaust passage 18 is discharged to the outside from the other end portion of the exhaust passage 18 via the exhaust treatment device.

In the intake passage 16 and the exhaust passage 18, a turbocharger (not illustrated) is provided. The turbocharger includes a compressor provided in the intake passage 16 and a turbine provided in the exhaust passage 18 (which are not illustrated). The compressor includes a compressor blade rotatably supported thereon. The turbine includes a turbine blade coupled to the compressor blade through a shaft and rotatably supported thereon. Thus, when the turbine blade is rotated by exhaust energy supplied from the cylinder 2 to the turbine provided in the exhaust passage 18, the compressor blade is rotated through the shaft, and intake air is compressed in the compressor. The intake air thus compressed (supercharged) is cooled in an intercooler (not illustrated) and supplied from the intake passage 16 to the cylinder 2.

The control device 100 includes a central processing unit (CPU), a memory, an input port, and an output port (which are not illustrated). The CPU executes various types of processing. The memory includes a read only memory (ROM) and a random access memory (RAM). The ROM stores programs indicating the various types of processing executed by the CPU, and data pieces used for executing the various types of processing. The RAM stores, for example, processing results from the CPU. Through the input port and the output port, the control device 100 exchanges information with a device outside the control device 100. The input port is connected with the injection pressure sensor 102, the supercharging pressure sensor 104, and the accelerator position sensor 106.

The injection pressure sensor 102 detects a pressure (hereinafter, referred to as injection pressure) Pf of the fuel injected by the fuel injection device 10. The injection pressure sensor 102 transmits a signal indicating the detected injection pressure Pf to the control device 100.

The supercharging pressure sensor 104 detects a pressure (hereinafter, referred to as supercharging pressure) Pt of intake air supplied to the cylinder 2. The supercharging pressure sensor 104 transmits a signal indicating the detected supercharging pressure Pt to the control device 100.

The accelerator position sensor 106 detects a depression amount (hereinafter, also referred to as accelerator position) Aac of an accelerator pedal (not illustrated). The accelerator position sensor 106 transmits a signal indicating the detected accelerator position Aac to the control device 100.

The output port is connected with various electrical devices to be controlled (for example, the fuel injection device 10). That is, the control device 100 receives the signals from the various sensors connected to the input port, and transmits, in accordance with various processing results based on the received signals, control signals to the various electrical devices to be controlled, thus controlling the various electrical devices.

In the present embodiment, the control device 100 includes a setting unit 122 and an injection control unit 124 as functional blocks. The setting unit 122 and the injection control unit 124 may be configured as software or hardware.

The setting unit 122 acquires a required torque required for the engine 1 based on various signals through the input port and sets a fuel injection amount injected into the cylinder 2 in one cycle using the acquired required torque.

The injection control unit 124 controls the fuel injection device 10 such that the set fuel injection amount is injected into the cylinder 2.

The fuel injection device 10 of the engine 1 having the above-described configuration performs divided fuel injections, namely, a main injection of fuel and a sub injection performed before and after the main injection in order to improve fuel efficiency and reduce soot.

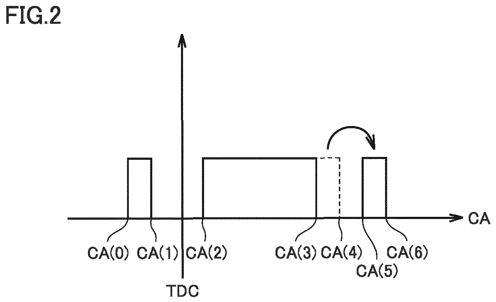

Fig. 2 is an explanatory diagram illustrating the main injection and the sub injection. In Fig. 2, a horizontal axis indicates a crank angle CA. In Fig. 2, a vertical axis indicates whether the fuel injection device 10 is in an operating state or in a non-operating state (that is, whether the injection hole is in the open state). For example, the control device 100 sets respective injection periods of the sub injection (hereinafter, referred to as pilot injection) performed before the main injection performed before the TDC, the main injection, and the sub injection performed after the main injection. In accordance with the set injection periods, the control device 100 controls the fuel injection device 10 such that each of the injection operations is performed in a corresponding one of the set injection periods.

Fig. 2 illustrates an example in which the pilot injection is performed in a first section from a crank angle CA(0) to a crank angle CA(1) before the TDC. Furthermore, Fig. 2 illustrates an example in which the main injection is performed in a second section from a crank angle CA(2) to a crank angle CA(3) after the TDC. Furthermore, Fig. 2 illustrates an example in which the sub injection after the main injection is performed in a third section from a crank angle CA(5) to a crank angle CA(6). Furthermore, Fig. 2 illustrates an example in which the main injection is performed in a fourth section from the crank angle CA(2) to a crank angle CA(4) in a case where the sub injection after the main injection is not performed. Here, a section extended from the second section in the fourth section (that is, a section from the crank angle CA(3) to the crank angle CA(4)) is indicated by a broken line.

As illustrated in Fig. 2, performing the divided fuel injections, namely, the main injection and the sub injection after the main injection achieves a reduction in an amount of fuel injected in the main injection as compared to the case where the sub injection after the main injection is not performed. This reduces the cooling loss derived from the main injection caused by contact of the fuel injected in the main injection with the wall surface of the combustion chamber 6, thus improving the fuel efficiency.

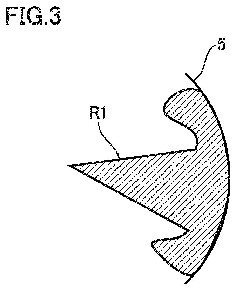

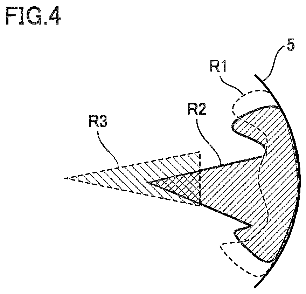

Fig. 3 is an explanatory diagram illustrating an example of a state of fuel injected in the case where the sub injection after the main injection is not performed. Fig. 4 is an explanatory diagram illustrating an example of a state of fuel injected in the case where the sub injection after the main injection is performed.

In Fig. 3, R1 indicates an example of a diffusion region of the fuel injected in the main injection in the case where the sub injection after the main injection is not performed. As illustrated in Fig. 3, the fuel injected in the main injection impinges on the wall surface of the recess 5 and diffuses along the wall surface, so that the diffusion region indicated by R1 in Fig. 3 is formed.

On the other hand, in Fig. 4, R2 indicates an example of a diffusion region of the fuel injected in the main injection in the case where the sub injection after the main injection is performed. Furthermore, in Fig. 4, R3 indicates an example of a diffusion region of the fuel injected in the sub injection in the case where the sub injection after the main injection is performed.

As illustrated in Fig. 4, as compared to the diffusion region R1 (broken line) of the fuel injected in the main injection in the case where the sub injection is not performed, since the injection amount of the fuel injected in the main injection is reduced, an area where the fuel comes into contact with the wall surface of the recess 5 is smaller as indicated by R2 in Fig. 4. This results in a reduction in the cooling loss derived from the main injection, thus improving the fuel efficiency.

Thus, in order to improve the fuel efficiency in the engine 1, the injection amount of the sub injection is increased. This results in a further reduction in the cooling loss derived from the main injection, thus improving the fuel efficiency.

However, the increase in the injection amount of the sub injection results in an increase in spray penetration by the sub injection, and an increase in a velocity of spray impinging on the wall surface of the combustion chamber. As a result, the fuel injected in the sub injection diffuses along the wall surface of the combustion chamber, which may result in an increase in the cooling loss derived from the sub injection, an increase in the cooling loss in the entire fuel injection, and deterioration of the fuel efficiency. Thus, it is required to set an optimum injection amount of the sub injection in consideration of the cooling loss derived from the sub injection.

For this reason, in the present embodiment, the control device 100 (more specifically, the setting unit 122) sets the injection amount of the sub injection such that the fuel injected in the sub injection reaches the wall surface of the combustion chamber 6 after the end of the sub injection and such that the velocity of the tip of the spray of the fuel is in a decrease state due to the end of the sub injection when the fuel reaches the wall surface of the combustion chamber 6.

With this setting, since the velocity of the tip of the spray of the fuel is in the decrease state due to the end of the sub injection when the fuel reaches the wall surface of the combustion chamber 6, the fuel impinging on the wall surface is prevented from greatly diffusing along the wall surface, and an increase in the cooling loss derived from the sub injection can be prevented.

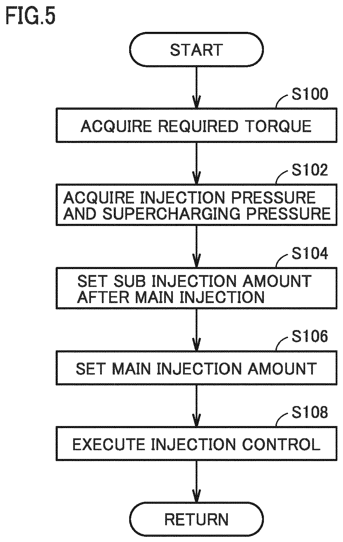

With reference to Fig. 5, description will be given below of an example of control processing executed by the control device 100. Fig. 5 is a flowchart illustrating an example of processing executed by the control device 100. The control device 100 executes the processing illustrated in the flowchart of Fig. 5 every time a predetermined time elapses.

In step (hereinafter, step is referred to as S) 100, the control device 100 (that is, the setting unit 122) acquires a torque (hereinafter, referred to as required torque) required for the engine 1. For example, the control device 100 may set the required torque using the accelerator position Aac detected by the accelerator position sensor 106, or may set the power required for the engine 1 using the accelerator position Aac and set, as the required torque, a value calculated by dividing the power by a current moving speed.

In S102, the control device 100 acquires the injection pressure Pf and the supercharging pressure Pt. For example, the control device 100 acquires the injection pressure Pf using a detection result from the injection pressure sensor 102. Furthermore, the control device 100 acquires the supercharging pressure Pt using a detection result from the supercharging pressure sensor 104.

In S104, the control device 100 sets the injection amount (hereinafter, also referred to as sub injection amount) of the sub injection after the main injection. For example, the control device 100 calculates, using the injection pressure Pf and the supercharging pressure Pt, time (hereinafter, referred to as reach time) required for the tip of the spray of the injected fuel to reach the wall surface of the combustion chamber 6.

For example, assuming a case where the injection is continued until the tip of the spray of the injected fuel reaches the wall surface of the combustion chamber 6, for example, a relational expression (for example, Arai, Proc. ICLASS 2015) of the following expression (1) is established between the start of the injection and a break-up time tb at which the fuel is broken up into droplets and atomized.$S = Kv \times {\left(2\times ΔP/ρl\right)}^{0.5} \times t$ (1)

Here, S represents a fuel spray travel of the tip of the fuel, Kv represents a velocity estimation coefficient, ΔP represents a difference (Pf-Pt) between the injection pressure Pf and the supercharging pressure Pt, ρl represents a fuel density, and t represents time.

Furthermore, after the break-up time tb, for example, relational expressions of the following expressions (2) and (3) are established.$S = Kp \times {\left(Dn\right)}^{0.5} \times {\left(ΔP/ρa\right)}^{0.25} \times {t}^{0.5}$ (2) $tb = Kbt \times ρl \times Dn / {\left(ΔP\times ρa\right)}^{0.5}$ (3)

Here, S represents a fuel spray travel of the tip of the atomized fuel, Kp represents an evaluation coefficient of the penetration of the spray, Dn represents an injection hole diameter, ρa represents a gas density in the cylinder 2, and Kbt represents an evaluation coefficient of the break-up time.

Thus, reach time tsp between the break-up time tb and time to reach the wall surface of the combustion chamber 6 can be calculated by a relational expression (for example, Inagaki, Journal of Society of Automotive Engineers, Vol. 38, No. 5, 2017) of the following expression (4).$tsp = {\left(R/Kp\right)}^{2} \times Dn \times {\left(ρa/ΔP\right)}^{0.5}$ (4)

Here, R represents a length from the fuel injection device 10 to the wall surface of the combustion chamber 6. The wall surface of the combustion chamber 6 refers to a wall surface (specifically, the wall surface of the recess 5 on the upper surface of the piston 4) of the combustion chamber 6 in a direction in which the fuel injection device 10 injects the fuel. The various coefficients Kv, Kp, and Kbt are predetermined values that are set in any suitable manner experimentally or designedly.

The control device 100 sets a plurality of injection amounts that can be injected within the reach time tsp. For example, the control device 100 calculates the velocity (hereinafter, referred to as tip velocity) V of the tip of the spray of the fuel, the velocity corresponding to each of the plurality of injection amounts that can be injected within the reach time tsp and being a velocity at which the fuel reaches the wall surface.

The control device 100 calculates, until a time point at which the injection ends, the tip velocity V, for example, by differentiating S in the above expressions (1) and (2) with respect to time. On the other hand, the control device 100 calculates, after the time point at which the injection ends, the tip velocity V using the following expression (5). $V = {V}_{inj} / \left(φ\times \left(t-{t}_{inj}\right)\times {V}_{inj}+1\right)$ (5)

Vᵢₙⱼ represents the tip velocity at the time point at which the injection ends, tᵢₙⱼ represents the injection period, and φ is calculated using the following expression (6).$φ = ρa \times As \times Cd / \left(2\times M\right)$ (6)

As represents a spray projected area, Cd represents a resistance coefficient, and M represents a spray mass. The spray projected area As and the resistance coefficient Cd are predetermined values that set in any suitable manner experimentally or designedly. Furthermore, the control device 100 calculates the spray mass M based on, for example, a volume of the injected fuel and the fuel density ρl. The control device 100 calculates a temporal change of the tip velocity V of each of the plurality of set injection amounts.

The control device 100 identifies an injection amount corresponding to a tip velocity that is less than or equal to a threshold value V(0) among the plurality of tip velocities on the wall surface corresponding, in one-to-one correspondence, to the plurality of injection amounts. The threshold value V(0) is a predetermined value that is set in any suitable manner experimentally or designedly. In a case where there are a plurality of identified injection amounts, the control device 100 sets, as the sub injection amount after the main injection, an injection amount having a high fuel efficiency improvement effect among the plurality of identified injection amounts.

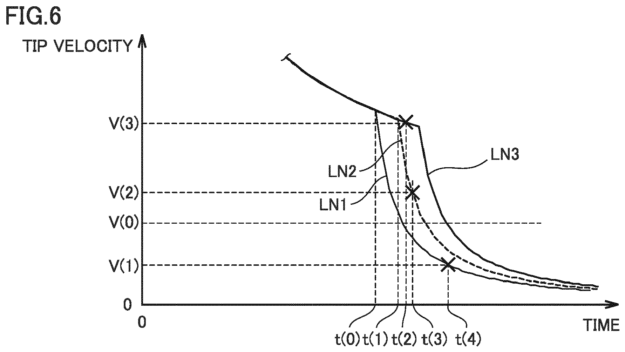

Fig. 6 is a diagram illustrating an example of the temporal change of the tip velocity of the spray. In Fig. 6, a vertical axis indicates the tip velocity. In Fig. 6, a horizontal axis indicates time. In Fig. 6, LN1 (thin line) indicates an example of a change in the tip velocity in a case where the sub injection amount is A(n). In Fig. 6, LN2 (broken line) indicates an example of a change in the tip velocity in a case where the sub injection amount is A(n+1)(>A(n)). In Fig. 6, LN3 (thick line) indicates an example of a change in the tip velocity in a case where the sub injection amount is A(n+2)(>A(n+1)). A difference between A(n+1) and A(n) is the same as a difference between A(n+2) and A(n+1). In Fig. 6, a mark "X" indicates a time point at which the tip of the spray of the fuel comes into contact with the wall surface of the combustion chamber 6 when the fuel is injected in the combustion chamber 6, and a change after the time point indicated by the mark X indicates a change in the tip velocity calculated in accordance with the above expression (5) assuming that there is no wall surface.

As indicated by LN1 in Fig. 6, in the case where the sub injection amount is A(n), the tip velocity decreases as time elapses, and when the sub injection ends, the tip velocity rapidly decreases after time t(0) from the tip velocity at the time t(0) as an inflection point. This is because a force for expanding the spray from a spray source toward the spray tip weakens owing to the stop of the injection operation. That is, after the inflection point, the tip velocity is in the decrease state due to the end of the sub injection. Then, at time t(4), the tip of the spray of the fuel comes into contact with the wall surface of the combustion chamber 6.

As indicated by LN2 in Fig. 6, in the case where the sub injection amount is A(n+1), similarly to LN1 in Fig. 6, the tip velocity decreases as time elapses, and when the sub injection ends, rapidly decreases after time t(1) from the tip velocity at the time t(1) as an inflection point and is in the decrease state due to the end of the sub injection. At this time, since the injection period is longer in the case where the sub injection amount is A(n+1) than in the case where the injection amount is A(n), the time t(1) is the time point after the time t(0). Then, at time t(3), the tip of the spray of the fuel comes into contact with the wall surface of the combustion chamber 6. Since the tip velocity is greater in time in the case where the injection amount of the sub injection is A(n+1) than in the case where the injection amount is A(n), the time t(3) is the time point before the time t(4).

As indicated by LN3 in Fig. 6, in the case where the injection amount of the sub injection is A(n+2), the tip velocity decreases as time elapses, similarly to LN1 and LN2 in Fig. 6. Then, since the injection period is longer in the case where the injection amount of the sub injection is A(n+2) than in the case where the injection amount is A(n+1), the tip of the spray of the fuel comes into contact with the wall surface of the combustion chamber 6 at the time t(2) before a time point at which the sub injection ends.

For example, the control device 100 sets, as the injection amount of the sub injection, the injection amount A(n) corresponding to the tip velocity that is less than or equal to the threshold value V(0) among the plurality of tip velocities on the wall surface corresponding, in one-to-one correspondence, to the plurality of injection amounts A(n), A(n+1), and A(n+2). Note that in Fig. 6, for convenience of description, the description has been given by using, as an example, the case where the injection amount that is less than or equal to the threshold value V(0) is identified from among the tip velocities on wall surface corresponding, in one-to-one correspondence, to the three injection amounts A(n), A(n+1), and A(n+2). However, the number of the injection amounts to be calculated for the tip velocities on the wall surface is not limited to three, and the tip velocities on the wall surface corresponding, in one-to-one correspondence, to four or more injection amounts may be calculated. The plurality of injection amounts may be set by, for example, an expression of A(n) = A0 + ΔA × n. A0 and ΔA are predetermined values.

For example, in a case where there are a plurality of injection amounts each corresponding to the tip velocity that is less than or equal to the threshold value V(0), the control device 100 sets, as the sub injection amount, the largest injection amount among the plurality of injection amounts.

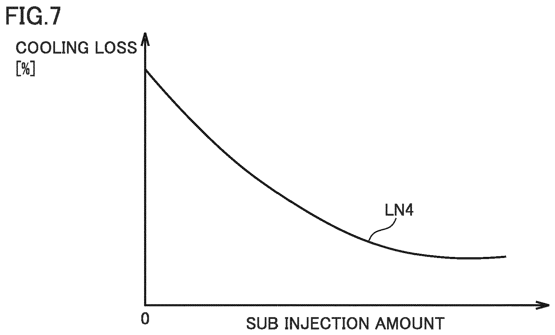

Fig. 7 is a diagram illustrating a relationship between the cooling loss and the sub injection amount. In Fig. 7, LN4 indicates a change in an overall cooling loss due to one fuel injection with respect to the cylinder 2 with respect to a change in the sub injection amount.

As illustrated in Fig. 7, the overall cooling loss decreases as the sub injection amount increases. Thus, in the case where there are the plurality of injection amounts each corresponding to the tip velocity that is less than or equal to the threshold value V(0), the largest injection amount among the plurality of injection amounts is set as the injection amount of the sub injection, thus making it possible to reduce the cooling loss.

Returning to Fig. 5, in S106, the control device 100 sets a main injection amount. For example, the control device 100 sets the main injection amount so as to satisfy the required torque. For example, the control device 100 may set the fuel injection amount for the cylinder 2 using the required torque and a map indicating the relationship between the required torque and the fuel injection amount, and set, as the main injection amount, a value obtained by subtracting, from the set fuel injection amount, the injection amount corresponding to the pilot injection and the sub injection amount set in S104. For example, the map indicating the relationship between the required torque and the fuel injection amount is set in advance in any suitable manner by experiment or the like so as to include the fuel injection amount that does not contribute to generation of torque such as the pilot injection while satisfying the required torque, and the map set in advance is stored in the memory of the control device 100.

In S108, the control device 100 (that is, the injection control unit 124) executes injection control. Specifically, the control device 100 causes a crank angle sensor, which is not illustrated, to detect a crank angle and causes the fuel injection device 10 to inject fuel in accordance with the detected crank angle. For example, the control device 100 executes the pilot injection at a first timing (crank angle), executes the main injection at a subsequent second timing, and further executes the sub injection at a subsequent third timing. Note that, the control device 100 sets the first timing, the second timing, and the third timing, for example, in accordance with the operating state of the engine 1.

An operation of the control device 100 based on the above structure and flowchart will be described.

During the operation of the engine 1, the required torque is acquired based on the accelerator position Aac and the moving speed (S100). In response to the acquisition of the required torque, the injection pressure Pf and the supercharging pressure Pt are respectively acquired using the injection pressure sensor 102 and the supercharging pressure sensor 104 (S102).

In a case where fuel in each of a plurality of injection amounts that can be injected as the sub injection is injected, a tip velocity at which the fuel reaches the wall surface is calculated using the acquired injection pressure Pf and supercharging pressure Pt.

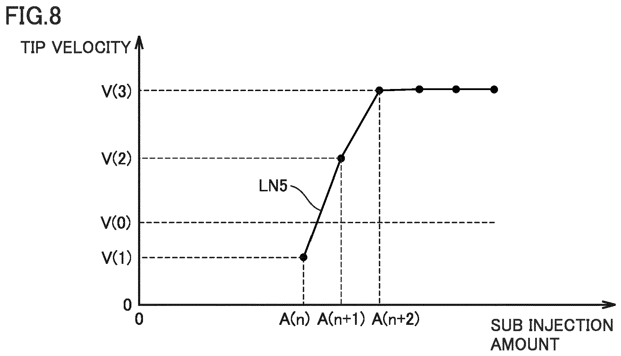

Fig. 8 is a diagram plotting the respective tip velocities on the wall surface corresponding to the plurality of injection amounts. In Fig. 8, a vertical axis indicates the tip velocity V. In Fig. 8, a horizontal axis indicates the sub injection amount. A result of calculating the tip velocity corresponding to each injection amount and at which the fuel reaches the wall surface is illustrated as a plot of Fig. 8.

Injection amounts that are less than or equal to the threshold value V(0) among the calculated tip velocities are identified, and the largest injection amount (injection amount A(n) in Fig. 8) among the identified injection amounts is set as the sub injection amount (S104). Then, the main injection amount is set using the set sub injection amount (S 106), and the injection control is executed (S108).

As described above, according to the control device for the engine according to the present embodiment, since the velocity of the tip of the spray of the fuel is in the decrease state due to the end of the sub injection when the fuel reaches the wall surface (the wall surface of the recess on the upper surface of the piston 4) of the combustion chamber 6, the fuel impinging on the wall surface is prevented from greatly diffusing along the wall surface, and an increase in the cooling loss derived from the sub injection can be prevented.

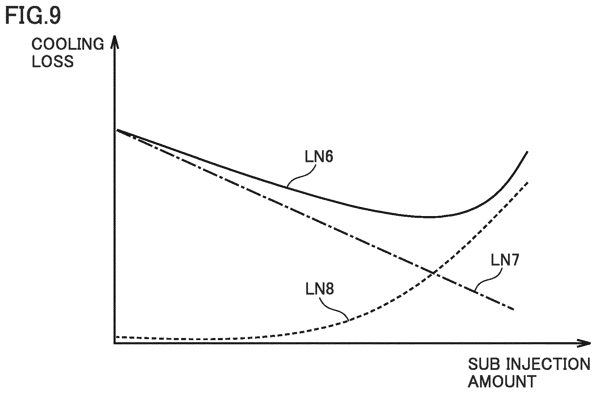

Fig. 9 is a diagram illustrating a relationship between the various cooling losses and the sub injection amount. In Fig. 9, a vertical axis indicates the cooling loss. In Fig. 9, LN6 indicates a change in an overall cooling loss due to one fuel injection with respect to the cylinder 2 with respect to a change in the sub injection amount. In Fig. 9, LN7 indicates a change in a cooling loss derived from the main injection in one fuel injection with respect to the change in the sub injection amount. In Fig. 9, LN8 indicates a change in a cooling loss derived from the sub injection in one fuel injection with respect to the change in the sub injection amount.

As the sub injection amount increases, as indicated by LN8 in Fig. 9, the cooling loss derived from the sub injection increases, but as indicated by LN7 in Fig. 9, the cooling loss derived from the main injection decreases more than the increase in the cooling loss derived from the sub injection. As a result, as indicated by LN6 in Fig. 9, the overall cooling loss decreases.

On the other hand, when the sub injection amount increases and reaches the injection amount attaining the tip of the spray of the fuel reaches the wall surface before a time point at which the injection ends, the increase in the cooling loss derived from the sub injection exceeds the decrease in the cooling loss derived from the main injection, and the overall cooling loss increases.

Thus, as described above, in the case where the injection amount corresponding to the tip velocity of the spray of the fuel that is less than the threshold value V(0) when the fuel reaches the wall surface of the combustion chamber 6 and to the largest injection amount is set as the sub injection amount, an injection amount near a value at which the overall cooling loss is minimized can be set as the sub injection amount. Consequently, it is possible to reduce the overall cooling loss and improve the fuel efficiency while preventing the increase in the cooling loss derived from the sub injection.

Thus, it is possible to provide the control device for the engine that sets an optimum injection amount of the sub injection in consideration of the cooling loss derived from the sub injection.

Furthermore, in the case where the injection amount of the main injection is set using the set injection amount of the sub injection, it is possible to prevent the increase in the cooling loss derived from the sub injection and at the same time to set the injection amount of the main injection satisfying the required torque.

Hereinafter, modifications will be described.

In the above-described embodiment, although it has been described that the control device 100 calculates, using the above-described expressions, the tip velocities in respective injection amounts based on the injection pressure Pf and the supercharging pressure Pt, for example, a map indicating the relationship among the injection pressure Pf, the supercharging pressure Pt, and the sub injection amount may be set in advance, and the sub injection amount may be set based on the injection pressure Pf detected using the injection pressure sensor 102, the supercharging pressure Pt detected using the supercharging pressure sensor 104, and the map. The map may be a map indicating the relationship among the injection pressure Pf, the supercharging pressure Pt, and the sub injection amount corresponding to the tip velocity less than or equal to the threshold value V(0) and to the largest injection amount among the selectable injection amounts. The map may be set by experiment or the like and stored in the memory in advance.

Furthermore, in the above-described embodiment, although it has been described that the control device 100 sets, as the sub injection amount, the injection amount corresponding to the tip velocity less than or equal to the threshold value V(0) and to the largest injection amount among the selectable injection amounts, an injection amount having the highest thermal efficiency among the selectable injection amounts may be set as the sub injection amount.

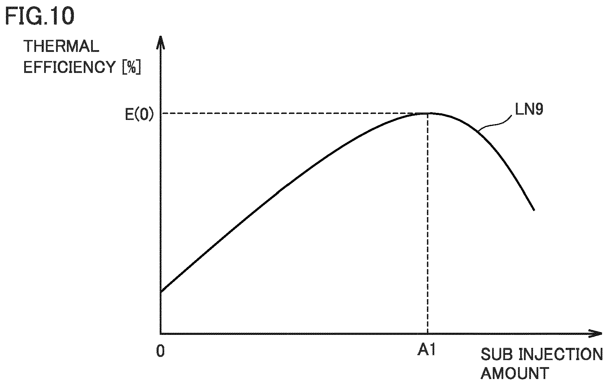

Fig. 10 is a diagram illustrating a relationship between thermal efficiency and the sub injection amount. In Fig. 10, a vertical axis indicates the thermal efficiency. In Fig. 10, a horizontal axis indicates the sub injection amount.

As illustrated in Fig. 10, the thermal efficiency increases as the sub injection amount increases from the case where the sub injection amount is zero. Then, a maximum value E(0) is obtained when the sub injection amount is A1, and the thermal efficiency decreases as the sub injection amount becomes larger than A1.

Thus, the control device 100 may set, as the sub injection amount, the injection amount that corresponds to the tip velocity less than or equal to the threshold value V(0), and is close to A1 among the selectable injection amounts. Note that, A1 may be a predetermined value or may be a value set in accordance with the operating state of the engine 1.

Furthermore, in the above-described embodiment, although it has been described that the control device 100 executes the sub injection for improving the fuel efficiency once after the main injection, such a sub injection may be executed twice or more. This further improves fuel efficiency.

Note that all or some of the modifications described above may be implemented in combination.

It should be understood that the embodiment disclosed herein is illustrative in all points and should not be interpreted as limiting. The scope of the present invention is not to be defined by the above description but rather by the scope of the claims, and is intended to include modifications within the scope of the claims.

### REFERENCE SIGNS LIST

1: engine, 2: cylinder, 3: top portion, 4: piston, 5: recess, 6: combustion chamber, 10: fuel injection device, 12: intake valve, 14: exhaust valve, 16: intake passage, 18: exhaust passage, 20: common rail, 100: control device, 102: injection pressure sensor, 104: supercharging pressure sensor, 106: accelerator position sensor, 122: setting unit, 124: injection control unit

## Claims

1. A control device (100) for an engine (1), the engine (1) including a cylinder (2), and a fuel injection device (10) that injects fuel into a combustion chamber (6) in the cylinder (2), the control device (100) comprising:
a setting unit (122) that sets a fuel injection amount injected into the cylinder (2) in one cycle based on a required torque required for the engine (1); and
a control unit (124) that controls the fuel injection device (10) such that the fuel injection amount set is injected into the cylinder (2), wherein
the fuel injection amount includes a first injection amount corresponding to a main injection and a second injection amount corresponding to a sub injection after the main injection, and
the setting unit (122)
sets the second injection amount such that the fuel injected in the sub injection reaches a wall surface of the combustion chamber (6) after an end of the sub injection and such that a velocity of a tip of spray of the fuel is in a decrease state due to the end of the sub injection when the fuel reaches the wall surface of the combustion chamber (6),
**characterized in that**
the setting unit (122)
calculates a reach time until the tip of the injected spray of the fuel reaches the wall surface of the combustion chamber on assumption that the injection is continued,
sets a plurality of injection amounts that can be injected within the reach time,
calculates, for each of the plurality of injection amounts, the velocity of the tip of the spray of the fuel when the fuel reaches the wall surface of the combustion chamber as a tip velocity, and
sets, as the second injection amount, an injection amount that achieves the tip velocity equal to or less than a threshold value and is largest among the plurality of injection amounts,
the fuel injection amount further includes a pilot injection amount corresponding to the sub injection before the main injection, and
the first injection amount is set to an amount obtained by subtracting the pilot injection amount and the second injection amount from the fuel injection amount after the second injection amount is set.

2. The control device (100) for the engine (1) according to claim 1, wherein the setting unit (122) sets the first injection amount based on the second injection amount set.

3. The control device (100) for the engine (1) according to claim 1 or 2, wherein the control unit (124) performs the sub injection a plurality of times after the main injection.

## Patentansprüche

1. Steuerungsvorrichtung (100) für eine Maschine (1), wobei die Maschine (1) einen Zylinder (2) und eine Kraftstoffeinspritzvorrichtung (10) hat, die Kraftstoff in eine Brennkammer (6) in dem Zylinder (2) einspritzt, wobei die Steuerungsvorrichtung (100) Folgendes aufweist:
eine Festlegungseinheit (122), die eine Kraftstoffeinspritzmenge, die in einem Zyklus in den Zylinder (2) eingespritzt wird, auf Grundlage eines erforderten Drehmoments festlegt, das für die Maschine (1) erfordert ist; und
eine Steuerungseinheit (124), die die Kraftstoffeinspritzvorrichtung (10) derart steuert, dass die festgelegte Kraftstoffeinspritzmenge in den Zylinder (2) eingespritzt wird, wobei
die Kraftstoffeinspritzmenge eine erste Einspritzmenge, die einer Haupteinspritzung entspricht, und eine zweite Einspritzmenge umfasst, die einer Nebeneinspritzung nach der Haupteinspritzung entspricht, und
die Festlegungseinheit (122)
die zweite Einspritzmenge derart festlegt, dass der Kraftstoff, der in der Nebeneinspritzung eingespritzt wird, eine Wandfläche der Brennkammer (6) nach einem Ende der Nebeneinspritzung erreicht, und derart, dass sich eine Geschwindigkeit einer Spitze eines Sprühstrahls des Kraftstoffs aufgrund des Endes der Nebeneinspritzung in einem Abnahmezustand befindet, wenn der Kraftstoff die Wandfläche der Brennkammer (6) erreicht,
**dadurch gekennzeichnet, dass**
die Festlegungseinheit (122)
eine Erreichzeit berechnet, bis die Spitze des eingespritzten Sprühstrahls des Kraftstoffs die Wandfläche der Brennkammer erreicht, unter der Annahme, dass die Einspritzung fortgesetzt wird,
eine Vielzahl von Einspritzmengen festlegt, die innerhalb der Erreichzeit eingespritzt werden können,
für jede der Vielzahl von Einspritzmengen die Geschwindigkeit der Spitze des Sprühstrahls des Kraftstoffs, wenn der Kraftstoff die Wandfläche der Brennkammer erreicht, als eine Spitzengeschwindigkeit berechnet, und
als die zweite Einspritzmenge eine Einspritzmenge festlegt, die die Spitzengeschwindigkeit erreicht, die gleich wie oder kleiner als ein Schwellenwert ist, und die unter der Vielzahl von Einspritzmengen am größten ist,
die Kraftstoffeinspritzmenge ferner eine Pilot-Einspritzmenge umfasst, die der Nebeneinspritzung vor der Haupteinspritzung entspricht, und
die erste Einspritzmenge auf eine Menge festgelegt wird, die durch Subtrahieren der Pilot-Einspritzmenge und der zweiten Einspritzmenge von der Kraftstoffeinspritzmenge erhalten wird, nachdem die zweite Einspritzmenge festgelegt worden ist.

2. Steuerungsvorrichtung (100) für die Maschine (1) nach Anspruch 1, wobei die Festlegungseinheit (122) die erste Einspritzmenge auf Grundlage der festgelegten zweiten Einspritzmenge festlegt.

3. Steuerungsvorrichtung (100) für die Maschine (1) nach Anspruch 1 oder 2, wobei die Steuerungseinheit (124) die Nebeneinspritzung eine Vielzahl von Malen nach der Haupteinspritzung durchführt.

## Revendications

1. Dispositif de commande (100) d'un moteur (1), le moteur (1) comprenant un cylindre (2), et un dispositif d'injection de carburant (10) qui injecte du carburant dans une chambre de combustion (6) dans le cylindre (2), le dispositif de commande (100) comprenant :
une unité de réglage (122) qui règle une quantité d'injection de carburant injectée dans le cylindre (2) en un cycle sur la base d'un couple requis pour le moteur (1) ; et
une unité de commande (124) qui commande le dispositif d'injection de carburant (10) de telle sorte que la quantité d'injection de carburant réglée est injectée dans le cylindre (2), dans lequel la quantité d'injection de carburant comprend une première quantité d'injection correspondant à une injection principale et une seconde quantité d'injection correspondant à une sous-injection après l'injection principale, et
l'unité de réglage (122)
règle la seconde quantité d'injection de telle sorte que le carburant injecté lors de la sous-injection atteint une surface de paroi de la chambre de combustion (6) après la fin de la sous-injection et que la vitesse d'une pointe de pulvérisateur de carburant est décroissante en raison de la fin de la sous-injection lorsque le carburant atteint la surface de paroi de la chambre de combustion (6),
**caractérisé en ce que**
l'unité de réglage (122)
calcule un temps d'atteinte jusqu'à ce que la pointe du pulvérisateur d'injection de carburant atteigne la surface de la paroi de la chambre de combustion en supposant que l'injection se poursuive,
règle une pluralité de quantités d'injection qui peuvent être injectées pendant le temps d'atteinte, calcule, pour chacune de la pluralité de quantités d'injection, la vitesse de la pointe du pulvérisateur de carburant lorsque le carburant atteint la surface de paroi de la chambre de combustion en tant que vitesse de pointe, et
fixe, comme seconde quantité d'injection, une quantité d'injection qui atteint une vitesse de pointe égale ou inférieure à une valeur seuil et qui est la plus grande parmi la pluralité de quantités d'injection,
la quantité d'injection de carburant comprend en outre une quantité d'injection pilote correspondant à la sous-injection avant l'injection principale, et
la première quantité d'injection est réglée sur une quantité obtenue en soustrayant la quantité d'injection pilote et la seconde quantité d'injection de la quantité d'injection de carburant après que la seconde quantité d'injection a été réglée.

2. Dispositif de commande (100) de moteur (1) selon la revendication 1, dans lequel l'unité de réglage (122) règle la première quantité d'injection sur la base de la seconde quantité d'injection réglée.

3. Dispositif de commande (100) de moteur (1) selon la revendication 1 ou 2, dans lequel l'unité de commande (124) effectue la sous-injection une pluralité de fois après l'injection principale.
